# EUROPÄISCHE PATENTSCHRIFT

(11) **EP 0 662 436 B1**
(45) Veröffentlichungstag und Bekanntmachung des Hinweises auf die Patenterteilung: **17.06.1998**
(21) Anmeldenummer: 95100320.1
(22) Anmeldetag: 11.01.1995
(51) Int. Cl.: B65G 65/44

(54) **Mehrelement-Bunkerboden-Austragssystem**
Multi element dispersing system on the bottom of a bin
Système de distribution à éléments multiples sur le fond d'une trémie

(30) Priorität: 11.01.1994 DE 4403986
(43) Veröffentlichungstag der Anmeldung: 12.07.1995
(73) Patentinhaber: SAXLUND GmbH, D-29614 Soltau-Harber (DE)
(72) Erfinder: Groffmann, Christoph, D-29646 Bispingen (DE); Stille, Heinz, D-21337 Lüneburg (DE)
(74) Vertreter: Leonhard, Frank Reimund, Dipl.-Ing.

(56) Entgegenhaltungen:
- DE-A- 3 143 608
- DE-A- 3 511 177
- DE-A- 3 906 253
- US-A- 3 891 099

## Beschreibung

Die Erfindung befaßt sich mit der Förder- und Austragstechnik von schwer zu förderndem Gut, wie beispielsweise entwässertem Klärschlamm (sog. Dickstoffe), noch einigermaßen liquidem Klärschlamm, Müll oder einer Mischung oder Zusammensetzung aus den vorgenannten schwer förderbaren Stoffen. Diese werden üblicherweise in einem Silo oder Bunker gelagert, das/der zylindrische Gestalt hat und meist von oben beschickt wird. Am unteren Ende des Bunkers oder Silos sind Austragselemente, meist Förderschnecken angeordnet, denen das schwer förderbare Gut gleichmäßig zugeführt werden soll.

In **DE-B 24 00 547.8** (Saxlund) wird ein Gleitrahmen am Bunkerboden verschieblich angeordnet, der gitterförmig aufgebaut ist und eine unrunde Gestalt aufweist. Trotz seiner unrunden Gestalt wird er so am Bunkerboden bewegt und geführt, daß er im wesentlichen die gesamte Bodenfläche des Bunkers überstreichen kann. Dafür sorgt **ein einzelnes** außerhalb des Bunkers angeordnetes Hydraulik-Organ, dessen Hub auf die unrunde Gestalt und die runde Bunker-Bodenbegrenzung abgestimmt ist. Unterhalb des Bunkerbodens und der Bewegungsebene des Gleitrahmens sind Förderschnecken angeordnet, die das von dem Gleitrahmen in ihre Förderrinnen hineingeschobene schwer förderbare Gut einer Dickstoffpumpe zuführen. Der Gleitrahmen "aktiviert" dabei durch besondere Formgebung den gesamten Bodenbereich und gewährleistet dadurch ein gleichmäßiges Absinken des Bunkerguts. Die **DE-A 35 11 177** (Saxlund) beschreibt einen Bunker oder Silo mit kreisförmigem oder polygonförmigem Querschnitt und einem in mehrere Leiterelemente unterteilten Gleitrahmen als mehrteilige Austragsvorrichtung. Unter dem Gleitrahmen sind verteilte Austragsöffnungen vorgesehen und der mehrteilige Gleitrahmen hat schmale Einzelrahmen (dort 10 bis 15), die unabhängig voneinander in Gleitrichtung seitlich aneinander vorbei verschiebbar sind, wozu sie unmittelbar nebeneinanderliegend angeordnet und geführt sind. Der jeweilige Antrieb eines jeweiligen Leiter-Einzelrahmens ist nach einem vorgegebenen Programm zur phasen-ungleichen Bewegung der Einzelrahmen betätigbar. Die Austragsöffnungen sind am Bunkerboden verteilt, um dort eine wesentlich gleichförmigere Austragung zu erreichen (vgl. dortige Spalte 6, Zeilen 41 bis 46). Aus dieser Druckschrift ist der Oberbegriff des Anspruches 1 abgeleitet.

In Abkehr von diesem über Jahrzehnte hinweg bewährten und auch nach Ablauf des Schutzes des eingangs erwähnten Patentes fortgesetzten einteiligen Gleitrahmens schlägt die Erfindung eine quer gerichtete Teilung des bislang einstückigen oder einelementigen Rahmens vor (Anspruch 1). Die Teilung erfolgt in einer Richtung, die nicht parallel zur Bewegungsachse der geteilten Rahmenelemente ist, wie in der zweitgenannten Druckschrift; die Stirnseiten der Teilrahmen sind vielmehr zueinander gerichtet (einander zugewandt), um in Richtung einer Austragsöffnung zu arbeiten.

Insbesondere eine Zweiteilung des am Boden des Bunkers rakelnden Rahmens ("Rakelrahmen") ermöglicht die Verbesserung der Gleichmäßigkeit der Schneckenfüllung. Auch werden die Länge Hubbewegungen, die jeder Hydraulikzylinder ausführen muß, reduziert. Daneben ergibt sich ein redundantes System, das auch nach Ausfall eines der Zylinder noch funktionstauglich ist. Wenn einer oder mehrere der Hydraulikaggregate ausfallen, bleiben noch einer (oder mehrere) Aggregate funktionsfähig und zumindest einer (oder mehrere) der zweigeteilten Rakelrahmen-Elemente bleiben am Bunkerboden bewegbar. Eine erforderliche Reparatur erweist sich deshalb als nicht mehr so dringlich, wie sie es wäre, wenn der einzelne rakelnde Rahmen oder sein einzelnes Zylinderaggregat ausgefallen wäre.

Verbunden mit dem geringeren Hub sind auch die geringeren mechanischen Abmessungen der Hydraulikzylinder, womit Kosten gesenkt werden können.

Ebenfalls zur gleichmäßigeren Schneckenfüllung schlägt die Erfindung vor, zwei unabhängig voneinander verschiebbare Gitter-Rahmenelemente am Bunkerboden unabhängig voneinander zu bewegen (Anspruch 10). Werden die Gitter-Rahmenelemente dabei gegensinnig bewegt, so daß immer eines der Rahmenelemente schneckennah ist, wenn das andere Rahmenelement sein bunkernahes Hubmaximum erreicht hat, so wird die Schnecke gleichmäßig jeweils von einer Seite aus gefüllt, wenn das jeweilige Rahmenelement gerade seine vorwärts gerichtete, zur Schnecke hinführende Schubbewegung ausübt und das andere Rahmenelement gerade die Rückschubbewegung zur Bunker-Innenwand ausführt.

Ansprüche 1 und/oder 10 werden durch die abhängigen Ansprüche konkretisiert und ergänzt.

Jedes Rahmenelement kann im wesentlichen halbkreisförmige Gestalt haben (Anspruch 3), wobei dies auch eine polygonförmige Gestaltung einschließt. Die Halbkreisform muß nicht zwingend als Hälfte eines Kreises verstanden werden, sie kann auch eine Teilkreisform sein, die etwas weniger, als die Hälfte des meist kreisförmigen Bunkerbodens abdeckt (vgl. Anspruch 2, Anspruch 5, Merkmalsgruppe (a)). Auch eine Viertelkreisform oder Drittelkreisform ist als Teilkreis zu verstehen.

Jedes der Rahmenelemente kann eine der Austragsschnecke zugewandte (vordere) Rahmenteil-Schiene - Austragsschiene - aufweisen, die maßgebend die Austragsschnecke über eine Austragsöffnung am Bunkerboden beschickt (Anspruch 5 Merkmalsgruppe (b)).

Zumindest eine der Bewegungen jedes der Rahmenteile ist eine Bewegung in Richtung auf die Austragsöffnung am Bunkerboden. Die Bewegungen der Rahmenteile können gegensinnig sein (Anspruch 7), so daß jeweils eine Schubbewegung eine am Bunkerboden befindliche Teilmenge des schwer zu fördernden Gutes der Austragsschnecke zufördert (Gegen-Synchronbewegung).

Mehrere oder alle der Schienen der unabhängig voneinander bewegbaren Rahmenelemente können eine unsymmetrische, insbesondere dreieckförmige Querschnitts-Gestalt aufweisen, die abhängig von der Bewegungsrichtung des jeweiligen Rahmenelements eine Förderbewegung (zur Förderschnecke hin) veranlassen oder eine wenig mechanische Energie verbrauchende Gleitbewegung (Rückschubbewegung, in Richtung zur Bunkerwandung) zwischen Bunkerboden und darauf aufliegenden schwer beförderbarem Gut erlauben. Diese dreieckförmige Gestalt ist in Anspruch 6 näher umrissen, sie wird allerdings auch vom Stand der Technik bereits beschrieben (vgl. **DE-A 35 11 177**, dort Ansprüche 2, 3).

Aufgrund der kürzeren Bewegung der einzelnen Teilrahmen können die Hydraulikaggregate einen geringeren Hub haben, sie können als Kurzhub-Zylinder ausgestaltet sein (Anspruch 8).

Obwohl es nicht unbedingt erforderlich ist, daß jedes der Rahmenelemente des Rakelrahmens geführt ist, ist es gleichwohl vorteilhaft, wenn jedes der Gleitrahmenelemente an seiner vorderen Kante, die nahe der Bunkerwandung entlang bewegt wird, mit einem Gleitlager geführt ist, um unerwünschte Ausweichbewegungen vom Bunkerboden weg zu vermeiden und die Kräfte, die das Hydraulikaggregat aufbringt, nur und allein auf das der Förderschnecke zuzuführende Gut auszuüben (Anspruch 9).

Nachdem die Rahmenelemente des mehrgeteilten Gesamtrahmens stirnseitig einander zugewandt sind und arbeiten, existiert an jedem Rahmenelement zumindest eine teilkreisförmige Außenschiene, die der Form der Bunkerwandung angepaßt ist; sie nimmt gegebenenfalls die Polygonform der polygonförmigen Bunkerwand an.

Jedes Rahmenelement setzt sich aus Segmenten (Schienen) zusammen (Anspruch 5); die Schienen sind miteinander jeweils zu einem verwindungssteifen Rahmenelement fest (unlösbar) verbunden. Ein mehrelementiger Rahmen beschreibt also mehrere einheitliche Rahmenelemente, das jedes aus fest zusammengefügten Segmenten besteht.

Die Erfindung wird anhand eines Ausführungs**beispiels** in ihrem Verständnis vertieft.

**Figur 1** veranschaulicht ein Ausführungsbeispiel der Erfindung mit zwei am Bunkerboden bewegbaren Rahmenelemente A und B, wobei eine Aufsicht auf den Bunkerboden mit jeweils außenliegenden Hydraulik-Zylindern 20a,20b gezeigt ist.

**Figur 2** veranschaulicht die im Querschnitt dreieckförmige Gestalt der beispielhaft herausgegriffenen Rahmenelement-Schiene 11a, die eine Mitnehmerfläche M und eine Gleitfläche G hat. Die Bewegung dieser Schiene 11a - und damit die Bewegung des gesamten Teilrahmens A - ist mit v in Figur 2 angedeutet.

**Figur 3** veranschaulicht den Stand der Technik, wie er in der eingangs erwähnten Verkaufsmitteilung repräsentiert ist und wie er sich sinngemäß aus der P 24 00 547.8 ergibt.

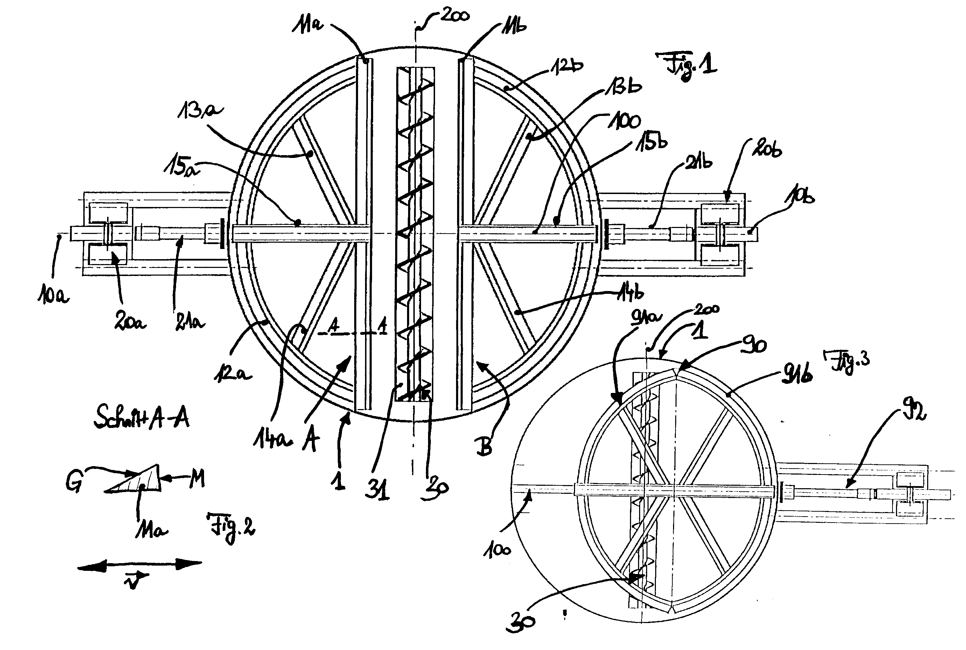

Zum Stand der Technik (Figur 3) sei erwähnt, daß ein (einzelnes) Hydraulikaggregat 92 sich außerhalb des Umrisses des Bunkers 1 befindet und über eine Kolbenstange in einer Antriebs-Achsrichtung 100 den unrunden **einteiligen** Gleitrahmen 91a/91b hin- und herbewegt. Der Gleitrahmen 91a/91b ist über Gleitlager 90 am Bunkerboden gehalten und geführt. Dies wird aus der erwähnten Verkaufsmitteilung in perspektivischer Darstellung ebenso deutlich wie aus P 24 00 547.8. Der unrunde einelementige Gleitrahmen besteht aus zwei Teilkreisen, die verkürzte Halbkreise sind und sich an den Gleitlagerstellen 90 treffen, wo sie fest miteinander verbunden sind. Die jeweils fast halbkreisförmigen Schienen 91b,91a bilden die bunkerwandseitigen Enden des Gleitrahmens. In zur Antriebsachse 100 senkrechter Richtung - entlang der Austragsachse 200 - ist eine Austragsschnecke 30 vorgesehen, die unterhalb des Bunkerbodens angeordnet ist und der über eine Öffnung im Bunkerboden schubweise Bunkergut zugeführt wird, abhängig von der Bewegung des Gleitrahmens 91b/91a und veranlaßt durch die Mitnehmerkante M der jeweils keilförmig ausgerichteten Zwischenschienen innerhalb des einstückigen Gleitrahmens.

Der Bunker ist in allen Beispielen mit 1 bezeichnet.

**Figur 1** veranschaulicht das Ausführungsbeispiel der Erfindung. Bei ihm sind zwei außerhalb des Bunkerumrisses angeordnete Hydraulikzylinder 20a,20b vorgesehen, die in der Antriebsachse 100 jeweils über eine Kolbenstange 21a,21b ein teilkreisförmiges Rahmenelement A,B antreiben. Die jeweiligen Achsen 10a,10b der Kolbenstangen 21a,21b fluchten in diesem Beispiel mit der Antriebsachse 100.

Jeder der beiden Rahmen A,B ist aus Rahmensegmenten oder Schienen 11a,11b,12a,12b,13a,13b,14a,14b,15a,15b aufgebaut, die eine gitterförmige Struktur ergeben, die nachfolgend anhand des Rahmens A näher erläutert wird; die Ausführungen gelten sinngemäß auch für den Rahmen B, mit der Maßgabe, daß die kleine Ziffer a durch die kleine Ziffer b zu ersetzen ist.

Die Teilkreisform des Rahmens A gründet auf einem der Bunkerwandung angepaßten Segment 12a, das in diesem Beispiel halbkreisförmig ist, das aber ebenso als polygonförmiges Segment gemeint ist, wenn der Bunkerboden eine entsprechende polygonförmige Umrißgestalt hat. Am Vorderende des Rakel-Rahmenelements A ist ein etwa gerades Schubsegment 11a vorgesehen, desen Länge etwas kürzer ist, als der Durchmesser des Bunkers 1. An seinen nahe der Bunkerwandung 1 liegenden Enden kann es mittels Gleitlager geführt sein. Damit führt es den gesamten Teilrahmen A gleitend am Bunkerboden. Mit diesem Schub-Rahmensegment 11a wird der maßgebende Teil des schwer zu fördernden Gutes vom Bunkerboden nach vorne in Richtung zur Austrittsöffnung 31 geschoben (gerakelt), von wo es in die Förderschnecke 30 fällt, die quer zur Antriebsachse 100 der Rakel-Teilrahmen A,B längs ihrer Austragsachse 200 angeordnet ist und arbeitet.

In Bewegungs-Achsrichtung 10a,10b verbindet eine Stützschiene 15a das teilkreisförmige Segment 12a mit dem etwa geraden Austragssegment 11a. Damit wird eine erhöhte Stabilität des Teilrahmens erreicht.

Das Stützsegment 15a teilt jeden Teilrahmen in eine linksseitige und eine rechtsseitige Hälfte, in der jeweils schräg zur Bewegungsrichtung ein Zwischenförder-Segment 13a,14a vorgesehen ist. Die beiden Zwischenförder-Segmente 13a,14a bilden eine in Richtung auf die Förderschnecke 30,31 gerichtete Keilform, die im gitterförmigen Rahmen A angeordnet ist.

Die gleiche Bauweise kann auch für den Rahmen B verwendet werden, wie oben erwähnt ist.

Die beiden Teilrahmen A,B können sich über die Hydraulik-Zylinder 21a,21b gesteuert gegenläufig so bewegen, daß immer eines der Rahmenelemente gerade nahe der Förderschnecke ist, während das jeweilige andere Rahmenelement nahe der Bunkerwandung 1 sich befindet. Damit wird eine Verbesserung der Gleichmäßigkeit der Zuführung von Bunkergut zur Förderschnecke erreicht, bei gleichzeitiger Reduzierung des erforderlichen Hubes der Hydraulikzylinder 20a,20b.

Die beiden Rakel-Rahmenteile können aber auch in anderer zueinander ausgerichteter Bewegung gehalten sein, so z.B. in einer gleichsinnigen Bewegung, wenn sie gleichzeitig auf die Förderschnecke 30,31 zu arbeiten. Zwischen diesen beiden Extrema können die Rahmen auch in einer teilweise gegenläufigen Synchronbewegung gehalten sein, so daß sie teilweise gleichzeitig auf die Förderschnecke zufördern und teilweise gleichzeitig keine Förderung auf die Schnecke hin bewirken.

Erwähnt werden soll noch das Gleitlager, das in Figur 3 mit 90 bezeichnet ist und mit dem auch die bunkerwand-nahen Enden der Schub-Segmente 11a,11b gleitend am Bunkerboden geführt sein können.

Zur Teilkreisform der jeweiligen Rakel-Teilrahmen sei erwähnt, daß diese Teilkreisform eine näherungsweise Halbkreisform sein kann, bezüglich der Form und der Fläche des Bunkerbodens. An Figur 1 ist jedoch auch ersichtlich, daß diese Teilkreisform etwas geringer ist, als die Halbkreisform, die durch die Förderachse 200 festgelegt wird. Diese Differenz von Teilkreisform des Teilrahmens gegenüber der Halbkreisform des Bunkerboden beträgt etwa 15 bis 30%. Mit dieser Differenz wird der Hub der jeweiligen Hydraulikzylinder 20a,20b definiert.

Es versteht sich, daß statt einer Förderschnecke 30,31 auch mehrere parallel verlaufende Förderschnecken am Bunkerboden unter einer oder jeweiligen Austragsöffnung(en) 31 angeordnet sein können.

Die Erfindung befaßt sich mit einem Austragssystem, das an einem Bunkerboden als gitterförmiger Rahmen verschiebbar arbeitet und dabei das schwer förderbare Bunkergut (Klärschlamm, Dickstoff, Müll) in kleinen Schüben kontinuierlich einer Förderschnecke unter dem Bunkerboden zuführt, die es unterhalb des Bunkerbodens seitlich herausfördert und weiteren Komponenten einer Anlage zufördert. Die Erfindung schlägt dazu - in Abkehr von bekannten einteiligen Gleitrahmen - vor, den Rahmen in mehrere Rakelrahmen-Teile (A,B), insbesondere zwei etwa halbkreisförmige Rahmenteile, zu zerlegen und jeden dieser Rahmenteile mit einem unabhängig steuerbaren Hydraulikaggregat (21a,21b) am Bunkerboden zu bewegen. Die Bewegung kann gegenläufig sein, so daß immer einer (A) der Rahmenteile nahe der Austragsschnecke (30,31) ist, während der andere Rahmenteil (B) sich nahe der Bunkerwandung befindet.

Damit wird eine Verbesserung der Gleichmäßigkeit der Förderschnecken-Füllung ebenso erreicht, wie eine Erhöhung der Redundanz und eine darauf gründende Verbesserung der Betriebssicherheit der Austragseinrichtung. Die Hydraulikzylinder können kleiner und kostengünstiger sein und müssen nur noch einen geringeren Hub überstreichen.

## Patentansprüche

1. **Mehrteiliger Rakelrahmen (A,B)** für einen mit Klärschlamm, Dickstoffen oder Müll - oder einer Mischung daraus - beschickten Bunker (1), an dessen Boden er (A,B) verschiebbar (20a,21a;20b,21b) angeordnet ist und dessen mehrere Teilrahmen (A;11a,12a,13a,14a,15a; B;11b,12b,13b,14b,15b) unabhängig voneinander bewegbar sind, **dadurch gekennzeichnet, daß** jeder Teilrahmen vordere Rahmenelement-Schienen (11a,11b) hat, die einander zugewandt sind, um in Richtung einer Austragsöffnung (31) zu arbeiten.

2. Rakelrahmen nach Anspruch 1, bei dem jeder Teilrahmen (A,B) im wesentlichen eine Teilkreisform hat.

3. Rakelrahmen nach Anspruch 2, bei dem jeder Teilrahmen (A,B) im wesentlichen eine halbkreisförmige Gestalt hat (12a,12b) und der Rakelrahmen aus zwei Teilrahmen besteht.

4. Rakelrahmen nach Anspruch 1, 2 oder 3, bei dem unterhalb der Austragsöffnung (31) des Bunkers (1) eine Fördereinrichtung (30), insbesondere eine sich über die Fläche des Bunkerbodens hinaus erstreckende, in einer Förderrinne geführte Förderschnecke (30) angeordnet ist.

5. Rakelrahmen nach einem der vorhergehenden Ansprüche, bei dem jeder der mehreren Teilrahmen aus mehreren Schienen gitterförmig gestaltet ist:
(a) eine im wesentlichen teilkreisförmige Schiene (12a,12b) bildet das der Bunkerwand zugewandte Ende des jeweiligen Teilrahmens (A,B); und/oder
(b) eine der Austragsöffnung (31) am Bunkerboden zugewandte, im wesentlichen gerade Austragsschiene (11a,11b) bildet das Austragsende des jeweiligen Teilrahmens (A,B); und/oder
(c) zwei im Winkel zueinander und mit Keilrichtung zur Austragsöffnung (31) ausgerichtete Innenschienen (13a,14a; 13b,14b) sind im jeweiligen Teilrahmen (A,B) angeordnet; und/oder
(d) eine etwa in Rakelrahmen-Bewegungsrichtung ausgerichtete Stützschiene (15a,15b) ist mittig in dem jeweiligen Teilrahmen (A,B), insbesondere zwischen den Innen-Keilschienen (13a,13b,14a,14b), angeordnet.

6. Rakelrahmen nach einem der vorhergehenden Ansprüche, bei dem die meisten oder alle Schienen (11,12,13,14,15, jeweils a und b) des Rahmens eine im Querschnitt dreieckförmige Gestalt haben, wobei eine zur Rakelrahmen-Bewegungsebene etwa vertikale Mitnehmerkante (M) der Bunkermitte (31) oder Austragsöffnung (31) zugewandt ist, eine Schrägkante (S) gegenüber der Rakelrahmen-Bewegungsebene schwach geneigt ist und die dritte Querschnittskante der dreieckförmigen Gestalt eine zum Bunkerboden etwa parallele (gleitende) Seite ist.

7. Rakelrahmen nach einem der vorhergehenden Ansprüche, dessen beide Teilrahmen über unabhängig voneinander steuerbare Hydraulikzylinder (20a,20b) bewegbar sind, wobei die Zylinder insbesondere so gesteuert sind, daß die Teilrahmen eine gegenläufige Schub/Rückschub-Bewegung ausführen (Gegen-Synchronbewegung).

8. Rakelrahmen nach einem der vorhergehenden Ansprüche, bei dem Hydraulikaggregate vorgesehen sind, die Kurzhub-Zylinder (20a,20b) sind.

9. Rakelrahmen nach einem der vorhergehenden Ansprüche, bei dem jeder Teilrahmen (A;B) über ein bunkerfestes Gleitlager in Bewegungsrichtung geführt ist.

10. **Arbeitsverfahren** einer Vorrichtung nach einem der vorigen Ansprüche zum gleichmäßigen Füllen einer - unter dem Boden eines Bunkers (1) oder Silos (1) angeordneten - Förderschnecke (30,31), bei dem zwei unabhängig voneinander, insbesondere gegenläufig synchron, verschiebbare Gitter-Teilrahmen (A,B) am Bunkerboden, oberhalb der Förderschnecke (30,31) gleitend verschoben werden, um eine Bunkerfüllung in kleinen Schüben von zwei Seiten der Förderschnecke (30, 31) zuzuführen.

## Claims

1. **A multi-part scraper frame (A, B)** for a bin (1) loaded with sewage sludge, thick matter, refuse or a mixture thereof, the same being movably (20a, 21a; 20b, 21b) disposed on the bottom of the bin (A, B) and comprising a number of component frames (A; 11a, 12a, 13a, 14a, 15a; B; 11b, 12b, 13b, 14b, 15b) movable independently of one another, **characterised in that** each component frame has front elements or rails (11a, 11b) which face one another in order to operate in the direction of a discharge opening (31).

2. A scraper frame according to claim 1, wherein each component frame (A, B) has substantially a part-circular shape.

3. A scraper frame according to claim 2, wherein each component frame (A, B) has a substantially semicircular shape (12a, 12b) and the scraper frame comprises two component frames.

4. A scraper frame according to claim 1, 2 or 3 wherein a conveyor (30), more particularly a screw conveyor (30) extending over the surface of the bottom of the bin and guided in a channel, is disposed below the discharge opening (31) of the bin (1).

5. A scraper frame according to any of the preceding claims, wherein each of the plurality of component frames is made up of a number of rails forming a grid:
(a) a substantially part-circular rail (12a, 12b) forms the end of each respective component frame (A, B) facing the bin wall; and/or
(b) a substantially straight discharge rail (11a, 11b) facing the discharge opening (31) at the bottom of the bin constitutes the discharge end of the respective component frame (A, B); and/or
(c) two inner rails (13a, 14a; 13b, 14b) aligned at an angle to one another and converging in the direction of the discharge opening (31) are disposed in each respective component frame (A, B); and/or
(d) a supporting rail (15a, 15b) approximately in line with the direction of motion of the scraper frame is centrally disposed in the respective component frame (A, B), especially between the inner converging rails (13a, 13b, 14a, 14b).

6. A scraper frame according to any of the preceding claims, wherein most or all the rails (11, 12, 13, 14, 15, a and b respectively) in the frame have a triangular cross-section, wherein a driving edge (M) approximately perpendicular to the direction of motion of the scraper frame faces the middle (31) of the bin or the discharge opening (31), a sloping edge (S) is at a slight angle to the direction of motion of the scraper frame and the third edge of the triangular cross-section is a (sliding) side approximately parallel to the bottom of the bin.

7. A scraper frame according to any of the preceding claims and having two component frames movable by independently controllable hydraulic cylinders (20a, 20b), the cylinders especially being controlled so that the component frames make thrust and return thrust movements in opposite direction (counter-synchronous motion).

8. A scraper frame according to any of the preceding claims, wherein hydraulic units are provided in the form of short-stroke reciprocating cylinders (20a, 20b).

9. A scraper frame according to any of the preceding claims, wherein each component frame (A; B) is guided in the direction of motion via a sliding bearing secured to the bin.

10. **A method of operating** a device according to any of the preceding claims for uniformly filling a screw conveyor (30, 31) disposed under the bottom of a bin (1) or silo (1) wherein two component grid frames (A, B) movable independently of one another, especially in opposite directions in synchronism, are moved so as to slide on the bottom of the bin above the screw conveyor (30, 31) in order to supply the material in the bin to the screw conveyor (30, 31) in short thrusts or strokes from two sides.

## Revendications

1. Cadre racleur en plusieurs parties (A, B) pour une trémie (1) alimentée avec de la boue de curage, des matières épaisses ou des ordures, ou un mélange de ces produits, sur le fond de laquelle il (A, B) est disposé de façon coulissante (20a, 21a ; 20b, 21b) et dont plusieurs cadres partiels (A ; 11a, 12a, 13a, 14a, 15a ; B ; 11b, 12b, 13b, 14b, 15b) sont mobiles indépendamment les uns des autres, caractérisé en ce que chaque cadre partiel a des rails avant pour élément de cadre (11a, 11b), qui sont tournés les uns vers les autres pour travailler dans le sens d'une ouverture d'évacuation (31).

2. Cadre racleur selon la revendication 1, sur lequel chaque cadre partiel (A, B) a sensiblement une forme de cercle partiel.

3. Cadre racleur selon la revendication 2, sur lequel chaque cadre partiel (A, B) a sensiblement une conception de forme semi-circulaire (12a, 12b) et le cadre racleur se compose de deux cadres partiels.

4. Cadre racleur selon la revendication 1, 2 ou 3, sur lequel un système de transport (30), en particulier une vis transporteuse (30) s'étendant sur la surface du fond de la trémie et guidée dans une gouttière transporteuse, est disposé au-dessous de l'ouverture d'évacuation (31) de la trémie (1).

5. Cadre racleur selon l'une quelconque des revendications précédentes, sur lequel chacun des cadres partiels est conçu en forme de grille à partir de plusieurs rails :
(a) un rail (12a, 12b) sensiblement semi-circulaire forme l'extrémité, tournée vers la paroi de la trémie, du cadre partiel respectif (A, B) ; et/ou
(b) un rail d'évacuation (11a, 11b) tourné vers l'ouverture d'évacuation (31) sur le fond de la trémie et sensiblement droit forme l'extrémité d'évacuation du cadre partiel (A, B) respectif ; et/ou
(c) deux rails intérieurs (13a, 14a ; 13b, 14b) orientés en formant un angle l'un par rapport à l'autre et avec le sens de la clavette par rapport à l'ouverture d'évacuation (31) sont disposés dans le cadre partiel respectif (A, B) et/ou
(d) un rail support (15a, 15b) orienté à peu près dans le sens de déplacement du cadre racleur est disposé au centre dans le cadre partiel (A, B) respectif, en particulier entre les rails de clavette intérieurs (13a, 13b, 14a, 14b).

6. Cadre racleur selon l'une quelconque des revendications précédentes, sur lequel la plupart ou tous les rails (11, 12, 13, 14, 15, respectivement a et b) du cadre ont une conception de forme triangulaire en section, un bord d'entraînement (M) à peu près vertical par rapport au plan de déplacement du cadre racleur étant tourné vers le centre de la trémie (31) ou l'ouverture d'évacuation (31), un bord en chanfrein (S) étant faiblement incliné par rapport au plan de déplacement du cadre racleur et le troisième bord de section de la configuration de forme triangulaire étant un côté (glissant) à peu près parallèle au fond de la trémie.

7. Cadre racleur selon l'une quelconque des revendications précédentes, dont les deux cadres partiels peuvent être déplacés par des cylindres hydrauliques (20a, 20b) contrôlables indépendamment l'un de l'autre, les cylindres étant commandés en particulier de façon que les cadres partiels exécutent un mouvement de poussée/recul opposé (contre-mouvement synchrone).

8. Cadre racleur selon l'une quelconque des revendications précédentes, sur lequel il est prévu des groupes hydrauliques qui sont des cylindres à faible course (20a, 20b).

9. Cadre racleur selon l'une quelconque des revendications précédentes, sur lequel chaque cadre partiel (A ; B) est guidé par un palier à glissement fixé à la trémie dans le sens de déplacement.

10. Procédé d'exploitation d'un dispositif selon l'une quelconque des revendications précédentes pour le remplissage régulier d'une vis transporteuse (30, 31), disposée sous le sol d'une trémie (1) ou d'un silo (1), sur lequel deux cadres partiels à grille (A, B) coulissant indépendamment l'un de l'autre, en particulier dans un mouvement opposé synchrone, sont déplacés en coulissant sur le fond de la trémie, au-dessus de la vis transporteuse (30, 31), afin d'amener une charge de trémie dans de petits lots par les deux côtés de la vis transporteuse (30, 31).
